# EUROPEAN PATENT SPECIFICATION

(11) **EP 3 569 926 B1**
(45) Date of publication and mention of the grant of the patent: **02.12.2020**
(21) Application number: 19174283.2
(22) Date of filing: 14.05.2019
(51) Int. Cl.: F21V 13/04, F21V 7/08, F21V 5/00, F21V 8/00, F21W 131/202, F21Y 115/10, F21Y 113/10

(54) **SCYALITIC LAMP**
SCYALITISCHE LAMPE
LAMPE SCYALITIQUE

(30) Priority: 15.05.2018 IT 201800005368
(43) Date of publication of application: 20.11.2019
(73) Proprietor: CEFLA SOCIETA' COOPERATIVA, 40026 Imola (BO) (IT)
(72) Inventor: ZACCARO, Antonio, IMOLA (IT); BARAZZA, Giorgio, 40026 IMOLA (IT)
(74) Representative: Karaghiosoff, Giorgio Alessandro

(56) References cited:
- CN-U- 202 165 913
- DE-U1-202010 016 955
- FR-A1- 2 988 806
- US-A1- 2009 091 913
- US-A1- 2015 292 684
- US-A1- 2016 282 630

## Description

The present invention relates to the technical field of scyalitic lamps for lighting the oral cavity of patients during dental therapies. In particular, the invention relates to a scyalitic lamp having at least two light sources preferably in the form of LEDs, each emitting light radiations of different wavelength, capable of producing different colour temperatures.

Colour temperature, measured in kelvin (K) and used in lighting, photography and other related disciplines, is the temperature of an ideal black-body radiator that radiates light of a colour comparable to that of the light source. White light is obtained through the overlapping of a plurality of spectral components; the predominance of high frequencies, corresponding to blue light, or low frequencies, corresponding to red light, determines a different hue, defined by a specific colour temperature. High values of colour temperature correspond to a white light with a high blue component, called cold light, while low values of colour temperature denote the predominance of the red component, called warm light. Indicatively, the warm light in the present application has a colour temperature of about 3,000 - 4,500 kelvin, while the cold light (near to pale blue-white) has a colour temperature between 5,000 and 6,500 kelvin.

The lighting of a patient's oral cavity is affected by the following different problems, all well known in the art.

A first problem is that generally between the scyalitic lamp and patient's oral cavity, i.e. on the light radiation path, dentist's hand supporting a working instrument is interposed. The hand and the instrument inevitably project a shadow into the oral cavity, often toward the working area that should be best lighted. In the art, the use of parabolic, often multifaceted, reflectors is known in order to create a plurality of virtual images of the light source, so as to obtain light beams coming from different points, which successfully minimize the presence of shadows.

A second problem is that dentists have to perform different kinds of therapies, each requiring different kinds of lighting.

E.g., in prosthetic dentistry an important operation is tooth shade determination. Substantially, the colour of prosthetic teeth must be determined, which teeth have to be placed side by side to patient's natural teeth. In order for the prosthesis to have a natural aspect, not distinguishable from patient's own teeth, prosthetic teeth must be as similar as possible in colour and shape to patient's natural teeth. Tooth shade determination can be performed in different ways, from the more refined ones making use of a spectrophotometer, to the more traditional ones, making use of colour shades palettes (e.g. VITA shades) to compare to patient's natural teeth in order to evaluate their similarity. Lighting conditions heavily affect colour evaluation by human eye, due to metamerism.

In conservative dentistry, the same problem exists, in that dental composite resins used by dentists for filling are available in different shades. Here, too, the dentist has to choose the colour nearer to the tooth to be filled, so that the filling becomes inconspicuous.

In conservative dentistry, there is a further problem: said dental composite resins are typically provided in the form of pastes provided with a fluidity allowing their modelling. Once the dentist has obtained the desired shape of the filling, she/he must photopolymerize the dental composite resin so as to harden it. Said dental composite resins contain a photoinitiator, typically camphorquinone, which has a peak activity at 468 nm. Said photoinitiator is activated by lighting through light having a wavelength of about 440-470 nm; said wavelengths appear blue to the human eye. Since the wavelength of visible light in air is about 390 - 700 nm, at least a component of the visible light emitted by scyalitic lamps undesirably activates the photopolymerization of dental composite resins, while the dentist is still modelling said resins. As a consequence, providing a scyalitic lamp emitting visible light free from blue component is desirable, at least during the steps of dental reconstruction, which is a non-natural condition in that the blue spectral component is prevailing in white LEDs.

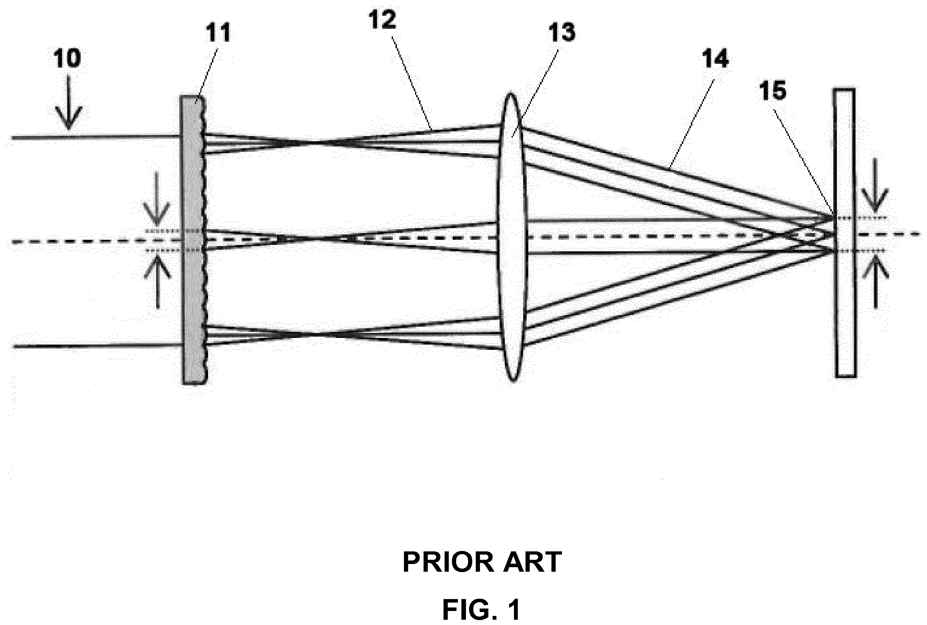

According to the known art, in LED dental lamps the scyalitic effect is obtained typically using a plurality of light sources, and collimating/focusing optics so that the overlapping of beams determines the correct lighting. The document EP 2 469 159 of Kaltenbach & Voigt describes an example of this kind, in particular an operating lamp comprising: a LED light source; first optical means, preferably for collimating the light emitted by said light source; subsequent second optical means suitable for distributing the light on the target. In a first approximation, the LED source can be considered a point source, and the directly coupled optic is configured to generate a plurality of partial beams, which are overlapped on the target by the secondary optics. The lamp described in the above-quoted document has an operation substantially comparable to that described in Figure 1. Such solution allows to obtain an adequate scyalitic effect and the possibility of overlapping a plurality of spectral contents, both for optimizing colour rendering and to allow the adjustment of colour temperature. The limit of such solution is in the need to replicate the lighting units many times, condition leading to a mechanical complexity and to an increase of costs. Moreover, supposing to couple a different chromatic component to each unit, the effect is a different light colour in correspondence of the different emission zone, which is unpleasant.

Another example of known art is EP 1 985 912 of Diez Ingolf, describing a surgical lamp comprising at least two LEDs, each featuring a different emission spectrum. The two LEDs are distanced from each other with respect to the optical axis at a distance so small that their emissions overlap before focusing on the target by the projection system, their distance from the optical axis being smaller than 5 mm. By adjusting the current for each LED, the colour temperature of the beams overlapping on the target can be adjusted. The limit of such solution is that the projection system is provided with a magnifying factor that can make partially visible the separation of the different colour components at the source level.

Document US2009/091913 discloses a lamp comprising a light source emitting light against an arched reflection shield. The light emitted by the light source, which is at least a Led is transmitted to the reflection shield through a light guide.

US2009/091913 discloses an embodiment according to the preamble of claim 1, in which two lamps each one comprising a light source, a light guide and a reflector are oriented against a common further reflector which focusses the light emitted by the two lamps to a common focus area or spot.

Aim of the present invention is providing an apparatus and a method allowing the dentist to effectively light, with an adequate scyalitic effect, patient's oral cavity, with a light emission having different colour temperatures, optimized for the different therapies that dentists must perform in their profession.

This object is achieved by an apparatus and a method having the features of the independent claims. Advantageous embodiment and refinements are specified in the claims dependent thereon.

According to an embodiment the scyalitic lamp comprises two lighting groups each one having an own light source an own light guide transmitting the light emitted by the light source to a reflector; each reflector of each light group having al elliptic concave shape and the light guide having a light emission output being in one of the two center of the elliptic shape; the elliptic reflector of the two lighting groups being oriented such that the further center of the ellipsoid consisting in the ideal prolongation of the elliptic reflector are essentially coincident.

With the term further center of the ellipsoid it is meant the center at which there is not provided the light emission output of the light guide.

According to a further feature, the two centres of the ellipsoid are the center on the major axis and the optical axis of the light emitted by the light guide is essentially coincident and or parallel with the said major axis.

According to a further embodiment the reflector may be symmetric with respect to the said major axis and to the optical axis of the light emitted by the light guide.

The scyalitic lamp according to the present invention is provided with at least two lighting groups, each comprising at least two light sources, preferably in the form of LEDs, one emitting warm white light (2,700°K) and one emitting cold white light (5,700°K). Each LED is electrically supplied independently thanks to a power supply, whose supply signal is variable so as to modify the overall emission intensity between 3,000 and 50,000 lux, according to the specific application and answering to eyesight adjustment over long periods of exposition to light. Moreover, said independent adjustment of LEDs allows to modify the colour temperature of the white light obtained through their combination, or the distribution of the intensity over the various spectral components.

In the preferred embodiment, each lighting group according to the present invention comprises three LEDs, two emitting warm white light and one emitting cold white light. The scyalitic lamp according to the present invention comprises a plurality of lighting groups, preferably two lighting groups.

In particular, using the lamps according to the present invention three different colour temperatures can be obtained:
- 4,300°K
   This colour temperature is warm, therefor the lighted object take a pinkier hue. It is a light similar to twilight light, which is more comfortable and relaxing for humans: the ideal lighting for odontophobic patients. It is used in surgical therapies wherein perfused tissues (mucosae) are visualized.
- 5,000°K
   This intermediate colour temperature is the one nearer to sunlight colour temperature. It is ideal for orthodontics, paediatric and conservative dentistry.
- 5,600°K
   This colour temperature is cold, and confers a blue hue to lighted object. As known, blue light promotes the three-dimensional perception of objects and dentist's concentration. This kind of light is ideal for tooth shade determination in prosthetic and conservative dentistry.

Moreover, a radiation having a wavelength of 2,700°K (Composite mode) can be obtained, markedly reducing the activation of the photoinitiator during the modelling of dental composite resins by dentists.

In order to obtain colour temperature adjustments, the light produced by the two LEDs is mixed through a light guide suitably shaped and transmitted to an elliptical reflector, said light being then channelled on the target with maximal efficiency.

The advantages connected to the present invention are manifold.

A first advantage consists in the increase of scyalitic effect, due to the presence of two distinct lighting groups, which through the coupled reflectors extend on a wide surface inside said lamp, obtaining the minimization of the shadows projected into the oral cavity by the interposition of dentist's hands and/or instruments between the light source and patient's oral cavity.

A second advantage is the availability of light having three distinct colour temperatures, which can be adapted to the undergoing therapy.

A third advantage is the availability of a lamp emitting a light radiation wherein the blue component is markedly reduced, allowing the dental composite resins to remain fluid and easily modellable for all the time required for modellation.

A fourth advantage lies in the possibility of adjusting the light intensity in a continuous way from 3,000 to 50,000 lux, which allows to adjust the lamp light intensity according to the sunlight coming from the windows and/or to the artificial environmental lighting of the dental practice.

A fifth advantage consists in sparing an optical element, in particular a converging lens, from the opto-mechanic assembly according to the known art, obtaining a productive simplification and an economic saving.

Further advantages and properties of the present invention are disclosed in the following description, in which exemplary embodiments of the present invention are explained in detail based on the drawings:
Figure 1 Schematic representation of the prior art in a lateral view;
Figure 2 Axonometric view of the lamp according to the present invention;
Figure 3 Axonometric view of lighting groups of the lamp according to the present invention;
Figure 4 Top view of a schematic representation of the convergence of the optical paths of the two lighting groups;
Figure 5 Lateral view of the beam path according to the present invention.

Figure 1 shows a schematic representation of the known art, wherein the path of the optical beams is shown in a lateral view. In Figure 1, the light source and the collimating element (which normally can be a converging lens system or a parabolic reflector) which parallelizes light beams 10 are not shown. Downstream these not shown elements there is provided a microlens array 11. Each microlens breaks the upstream collimated beam up, acting like a secondary light source. Beams 12 downstream array 11 impinge on a converging lens 13, and from this are projected to generate a light spot 15 lighting patient's oral cavity. The scyalitic effect of the lamp is the result of the combination and homogenization of the plurality of light components coming from each optical path generated by the single microlenses of the array, converging in the only spot 15 through said converging lens 13.

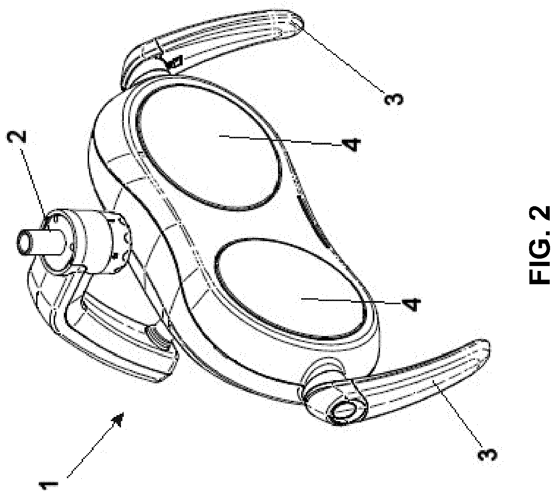

Figure 2 shows a scyalitic lamp 1 according to the present invention, in an axonometric view. A not shown lamp arm typically supports said lamp 1, which typically at its other end has a dental treatment unit or alternatively the ceiling or a wall of the room. The point of attachment of lamp arm is indicated with numeral 2. The lamp arm is an articulated arm, allowing to move the lamp 1 in the best position to light the oral cavity of the patient undergoing dental treatment. To this aim, the lamp 1 is provided with two handles 3 that allow to position the lamp in the three directions of space. In a preferred embodiment, said handles are removable and can be disinfected/sterilized in autoclave.

In order to best light patient's oral cavity, the lamp 1 is provided with two distinct, symmetrical lighting groups 4, each comprising three LEDs. Two of said LEDs are equal and generate the colder hue at 5,700°K, while the third LED generates the warmer hue at 2,700°K.

The two lighting groups 4 generates each a light bundle which is focussed on a focus which is common to the said two lighting groups. The optical axis of the said lighting groups being oriented converging one against the other and intersecting each other at a predefined focus point or spot.

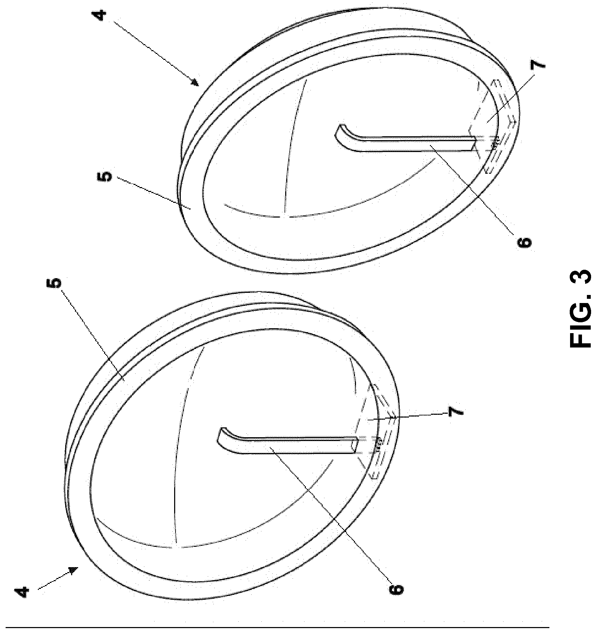

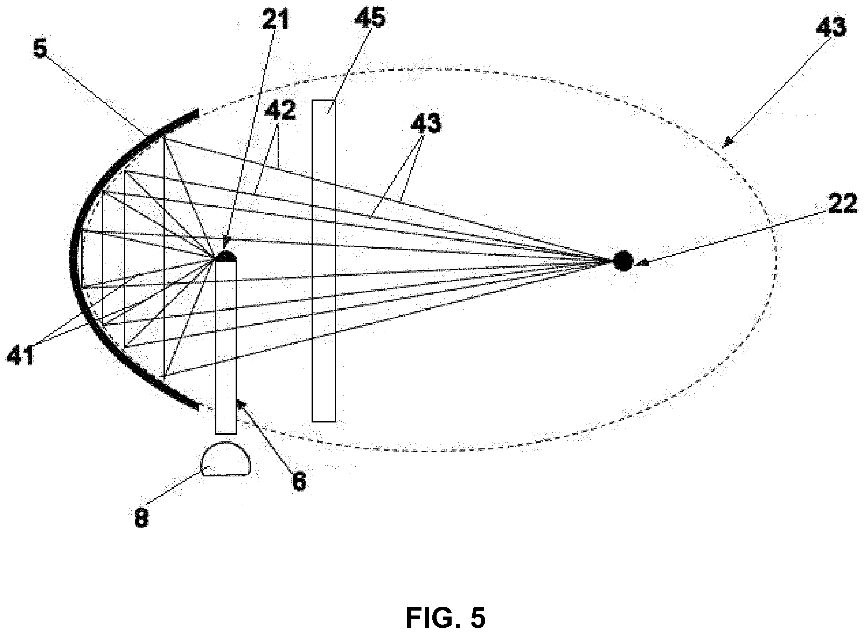

Figure 3 shows an axonometric view of the two lighting groups 4 freed from housings. Each lighting group 4 is provided with a reflector 5 having a circular opening and an ellipsoid reflection profile, as well as a light guide 6. At the base of each reflector 5 there is provided a small electronic board 7 on which said three LEDs 8 (visible in Figure 5) are soldered, having distinct colour temperatures. The light emitted by said LEDs is collected and mixed by the light guide 6 to channel it towards the first focus of the ellipsoid reflector 5. Figure 3 allows to observe that the opening of the reflector 5 has a circular shape, while does not allow to show that the profile of the reflector 5 is actually ellipsoid, detail best observable in the lateral view of Figure 5.

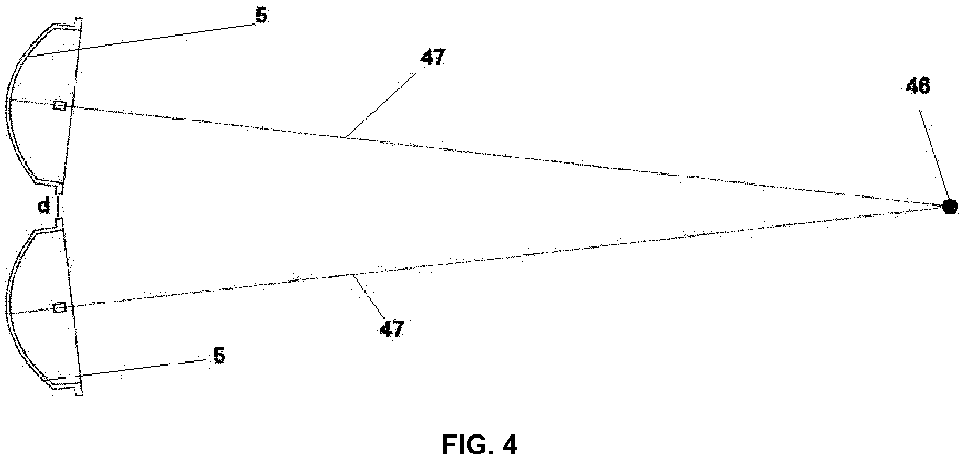

Figure 4 shows that the two lighting groups 4 are arranged so that the light beams emitted from each of them converge on the target 46, further enhancing the scyalitic effect. The numeral 47 indicates the central ray of each lighting group 4.

Figure 5 shows the optical path of the light beam according to the present invention. From said LEDs 8 the light beams are collected and mixed by the light guide 6, whose end constitutes the first focus 21 of the ellipse; said beams from here are projected 41 toward the ellipsoid reflector 5. The reflector 5 in its turn projects them 42 towards a microlens array 45 projecting the beams 43 toward the second focus 22 of the ellipse. The ellipse generatrix is indicated with numeral 43 and is the ideal prolongation of the surface of the reflector 5.

Said ellipsoid reflector 5 is perfectly smooth and has the double aim to pseudo-collimate the light beams outputting from the light guide and impinging on the plurality of microlenses of the array 11, and at the same time to focus each optical path produced by microlenses on the target. The novelty of the present invention consists in that using an ellipsoid reflector in lieu of a parabolic one, the output window of the light guide can be used as the first focus 21 of the ellipse, and the target on which the light spot is projected can be used as the second focus 22 of the ellipse, in this case patient's oral cavity. Typically said two focuses 21, 22 are at a distance of about 70 cm inside said ellipse generatrix 23.

The light beams emitted by the light guide 6 leave the light guide at an output of the said light guide which is positioned at one of the centre of the ellipsoid coinciding with the first focus 21.

The optical axis of the emitted light by the light guide is parallel or coincident to the axis of the ellipsoid on which the centres of the said ellipsoid coinciding with the two focus 21, 22 fall.

The two lighting groups 4 are oriented such that their optical axis converges and intersects at a point. Both the second focus 22 of the ellipsoid 43 of each lighting group 4 are coincident with this point.

Comparing Figure 1 (prior art) and Figure 5, it is apparent that with the optical scheme according to the present invention the converging lens 13 can be spared, the operation of convergence being performed directly by the elliptic reflector 5. The plane of the target of the light spot passes on the second focus 22 of the ellipse drawn by the reflector 5. This configuration allows to obtain an economic saving and a simplification of the opto-mechanical assembly.

As explained in the introduction, the apparatus according to the present invention is electronically controlled in order to obtain light having different colour temperatures (4,300, 5,000, 5,600°K; 2,700°K). The different colour temperatures are obtained acting on the drive current provided to the single LEDs 8, in particular acting on the duty cycle of the current of the single typology of LEDs (5,700 e 2,700°K). E.g., to increase the colour temperature bringing it to 5,700°K, the duty cycle of the current of 5,700°K LED must be increased, simultaneously decreasing the duty cycle of the current of 2,700°K LED. Obviously, for obtaining the composite mode, only the 2.700°K LED is supplied.

On the other hand, in order to act on the light wattage (3,000 - 50,000 lux) the duty cycle of both the typologies of LED must be increased or decreased at the same time.

Without loosing generality, the preferred embodiment shown in the present application is provided with two lighting groups. Nonetheless, a scyalitic lamp can be built using a plurality of lighting groups 4 arranged in different ways, e.g. on a spherical cap or dome, but arranged so that their optical axes projected by the plurality of reflectors converge as shown in Figure 4. In an embodiment, the distance d (visible in Figure 4) between or among the different lighting groups 4 might be adjustable. In the preferred embodiment shown in Figure 2, for mechanical reasons, said distance is fixed and not adjustable.
- 1: scyalitic lamp
- 2: attachment point of the lamp arm
- 3: handles
- 4: lighting groups
- 5: reflector
- 6: light guide
- 7: electronic board
- 8: LED
- 10: light beam
- 11: microlens array
- 12: light beams downside the array
- 13: converging lens
- 14: light beams downside the converging lens
- 15: spot
- 21: first focus
- 22: second focus
- 23: ellipse generatrix
- 41: light beam upstream the reflector
- 42: light beam downstream the reflector
- 43: light beam downstream the array
- 45: microlens array
- 46: target
- 47: central light ray

## Claims

1. Scyalitic lamp (1) preferably for dentistry, comprising at least two lighting groups (4), each lighting group (4) in its turn comprising:
- At least two light sources in the form of LEDs (8), having different colour temperature;
- At least a lighting guide (6) channelling the radiations emitted by said LEDs (8) towards
- A reflector (5), downstream of which
- A microlens array (45) is arranged
**characterized in that**
each of said reflectors (5) is an elliptic reflector, wherein a first focus (21) of said ellipse lies in said reflector, while a second focus (22, 46) lies on the plane on which the spot of the light beams emitted by said LEDs (8) is projected, said second foci (22, 46) of the reflectors of said at least two lighting groups (4) being coincident.

2. Scyalitic lamp (1) according to claim 1, wherein said light sources having a different colour temperature emit a first warmer colour temperature and a second colder colour temperature.

3. Scyalitic lamp (1) according to claim 1 or 2, wherein each lighting group comprises three light sources, two in the form of LEDs (8) emitting visible light having a colour temperature of 5,700°K and a third LED (8) emitting visible light having a colour temperature of 2,700°K.

4. Scyalitic lamp (1) according to one or more of the preceding claims, wherein the distance between the two focuses (21, 22) of the ellipse ranges 50-100 cm, preferably 70 cm.

5. Scyalitic lamp (1) according to one or more of the preceding claims, wherein each microlens of the array (45) breaks the upstream collimated beam up, acting like a secondary light source.

6. Scyalitic lamp (1) according to claim 1, wherein said lighting groups (4) are arranged so that the light beams emitted are converged on the target to be lighted; the position of said lighting groups (4) being optionally adjustable in approaching/distancing, always so that their beams converge on the target.

7. Method for controlling the scyalitic lamp (1) according to claims 1 to 6, in order to obtain the emission of light having different colour temperatures, wherein said controlling occurs increasing/decreasing the duty cycle of the LEDs (8).

8. Method for controlling the scyalitic lamp (1) according to claim 7, wherein the colour temperatures obtained are 5,600°K, 5,000°K, 4,300°K, 2,700°K.

9. Method for controlling the scyalitic lamp (1) according to claim 7 or 8, wherein in order to obtain a wattage ranging 3,000-50,000 lux the duty cycle of both the typologies of LEDs (8) is increased or decreased simultaneously.

## Patentansprüche

1. Scialytische Lampe (1), vorzugsweise für Zahnmedizin, mit mindestens zwei Leuchtgruppen (4), wobei jede Leuchtgruppe (4) ihrerseits umfasst:
- mindestens zwei Lichtquellen in Form von LEDs (8) mit unterschiedlicher Farbtemperatur;
- mindestens eine Lichtführung (6) zum Lenken der von den LEDs (8) emittierten Strahlungen in Richtung auf
- einen Reflektor (5), dem
- ein Mikrolinsen-Array (45) nachgeordnet ist,
**dadurch gekennzeichnet, dass** jeder der Reflektoren (5) ein elliptischer Reflektor ist, wobei ein erster Fokus (21) der Ellipse in dem Reflektor liegt, während ein zweiter Fokus (22, 46) auf der Ebene liegt, auf der der Spot der von den LEDs (8) ausgesandten Lichtstrahlen projiziert wird, wobei die zweiten Fokusse (22, 46) der Reflektoren der mindestens zwei Leuchtgruppen (4) zusammenfallen.

2. Scialytische Lampe (1) nach Anspruch 1, wobei die Lichtquellen mit unterschiedlicher Farbtemperatur eine erste wärmere Farbtemperatur und eine zweite kältere Farbtemperatur emittieren.

3. Scialytische Lampe (1) nach Anspruch 1 oder 2, wobei jede Leuchtgruppe drei Lichtquellen, zwei in Form von LEDs (8), die sichtbares Licht mit einer Farbtemperatur von 5700° K emittieren, und eine dritte LED (8), die sichtbares Licht mit einer Farbtemperatur von 2700° K emittiert, umfasst.

4. Scialytische Lampe (1) nach einem oder mehreren der vorhergehenden Ansprüche, wobei der Abstand der beiden Fokusse (21, 22) der Ellipse im Bereich von 50-100 cm, vorzugsweise 70 cm, liegt.

5. Scialytische Lampe (1) nach einem oder mehreren der vorhergehenden Ansprüche, wobei jede Mikrolinse des Arrays (45) den stromaufwärts kollimierten Strahl auflöst und dabei sich wie eine sekundäre Lichtquelle verhält.

6. Scialytische Lampe (1) nach Anspruch 1, wobei die Leuchtgruppen (4) so angeordnet sind, dass die emittierten Lichtstrahlen in dem zu beleuchtenden Ziel zusammenlaufen, wobei die Position der Leuchtgruppen (4) durch Annäherung/Entfernung stets so einstellbar ist, dass ihre Strahlen in dem Ziel konvergieren.

7. Verfahren zur Ansteuerung der scialytischen Lampe (1) nach den Ansprüchen 1 bis 6, um die Emission von Licht mit unterschiedlichen Farbtemperaturen zu erhalten, wobei die Ansteuerung durch Erhöhen/Verringern des Tastverhältnisses der LEDs (8) erfolgt.

8. Verfahren zur Ansteuerung der scialytischen Lampe (1) nach Anspruch 7, wobei die erhaltenen Farbtemperaturen 5600°K, 5.000°K, 4.300°K, 2.700°K betragen.

9. Verfahren zur Ansteuerung der scialytischen Lampe (1) nach Anspruch 7 oder 8, wobei zur Erzielung einer zwischen 3.000-50.000 Lux liegenden Beleuchtungsstärke das Tastverhältnis der beiden Typologien von LEDs (8) gleichzeitig erhöht oder erniedrigt wird.

## Revendications

1. Lampe scialytique (1) de préférence pour la dentisterie, comprenant au moins deux groupes d'éclairage (4), chaque groupe d'éclairage (4) comprenant à son tour:
- Au moins deux sources lumineuses sous forme de LED (8), ayant une température de couleur différente;
- Au moins un conduit de lumière (6) canalisant les radiations émises par lesdites LED (8) vers
- Un réflecteur (5), en aval duquel
- Un réseau de microlentilles (45) est disposé
**caractérisée en ce que** chacun desdits réflecteurs (5) est un réflecteur elliptique, dans laquelle un premier point focal (21) de ladite ellipse se trouve dans ledit réflecteur, tandis qu'un second point focal (22, 46) se trouve sur le plan sur lequel le projecteur de la lumière des faisceaux lumineux émis par lesdites LED (8) est projeté,
lesdits second points focaux (22, 46) des réflecteurs desdits au moins deux groupes d'éclairage (4) étant coïncidents.

2. Lampe scialytique (1) selon la revendication 1, dans laquelle lesdites sources lumineuses ayant une température de couleur différente émettent une première température de couleur plus chaude et une seconde température de couleur plus froide.

3. Lampe scialytique (1) selon la revendication 1 ou 2, dans laquelle chaque groupe d'éclairage comprend trois sources lumineuses, deux sous forme de LED (8) émettant de la lumière visible ayant une température de couleur de 5.700°K et une troisième LED (8) émettant de la lumière visible ayant une température de couleur de 2.700°K.

4. Lampe scialytique (1) selon l'une ou plusieurs des revendications précédentes, dans laquelle la distance entre les deux points focaux (21, 22) de l'ellipse est comprise entre 50-100 cm, de préférence 70 cm.

5. Lampe scialytique (1) selon l'une ou plusieurs des revendications précédentes, dans laquelle chaque microlentilles du réseau (45) décompose le faisceau collimaté en amont, agissant comme une source lumineuse secondaire.

6. Lampe scialytique (1) selon la revendication 1, dans laquelle lesdits groupes d'éclairage (4) sont disposés de sorte à ce que les faisceaux lumineux émis convergent vers la cible à éclairer; la position desdits groupes d'éclairage (4) étant éventuellement ajustable en approche/éloignement, toujours de sorte à ce que les faisceaux convergent vers la cible.

7. Méthode de contrôle de la lampe scialytique (1) selon les revendications de 1 à 6, afin d'obtenir les émissions de lumière ayant des températures de couleur différentes, dans laquelle ledit contrôle se produit en augmentant/diminuant le cycle de service des LED (8).

8. Méthode de contrôle de la lampe scialytique (1) selon la revendication 7, dans laquelle les températures de couleur sont 5.600°K, 5.000°K, 4.300°K, 2.700°K.

9. Méthode de contrôle de la lampe scialytique (1) selon la revendication 7 ou 8, dans laquelle le cycle de service des deux typologies de LED (8) est augmenté ou diminué simultanément pour obtenir une puissance ou consommation en watts comprise entre 3.000-50.000 lux.
